# EUROPEAN PATENT APPLICATION

(11) **EP 1 072 997 A1**
(43) Date of publication of application: **31.01.2001**
(21) Application number: 99901164.6
(22) Date of filing: 22.01.1999
(51) Int. Cl.: G06F 19/00, G07F 19/00

(54) **ELECTRONIC PURSE SYSTEM AND ELECTRONIC PURSE UNIT**

(30) Priority: 13.03.1998 JP 6274098
(71) Applicant: FUJITSU LIMITED, Kawasaki-shi, Kanagawa 211-8588 (JP); The Sakura Bank, Ltd., Chiyoda-ku, Tokyo 102-0074 (JP)
(72) Inventor: MORI, Nobuyuki, Fujitsu Ltd, Kawasaki-shi, Kanagawa 211-8588 (JP); MIYASAKA, Michihiro, Fujitsu Limited, Kawasaki-shi, Kanagawa 211-8588 (JP); YAMAGUCHI, Takayuki, The Sakura Bank,Ltd, Tokyo 102-0074 (JP)
(74) Representative: Mohun, Stephen John
(86) International application number: JP9900284
(87) International publication number: WO9946717

(57) **Abstract**

When a money payment command is received, a verification policy determination means (22) determines whether to execute a user authentication process to verify the owner's authenticity before executing the requested payment, based on some predefined criteria. If the verification policy determination means (22) has determined that a user authentication process is required, a user authentication means (23) verifies that the authorized owner agrees to transfer the monetary data. When the verification policy determination means (22) has determined that no user authentication process is required, a money payment means (24) transfers monetary data representing the amount of money that is specified in the money payment command, to a payee monetary data management unit (10).

## Description

### Technical Field

The present invention relates to an electronic wallet system which transfers money electronically, an electronic wallet device therefor, and a computer-readable medium storing a monetary data transfer program. More particularly, the present invention relates to an electronic wallet system which is used in small to large payment transactions, as well as to an electronic wallet device and a money transfer program designed therefor.

### Background Art

Electronic wallets (including electronic money, IC cards, and prepaid cards) provide various advantages in the usability, which one cannot enjoy in conventional cash transactions. Systems implementing such electronic wallets may be divided into two types: those with user authentication and those without user authentication.

In the electronic wallet system with user authentication, the payer has to authenticate his/her identity as the rightful owner of an electronic wallet by using passwords or his/her unique biometric characteristics such as fingerprints, voiceprints, and iris patterns. Although an electronic wallet device itself may be vulnerable to loss and theft, the system is protected from fraudulent use by an unauthorized person since it employs appropriate security mechanisms described above.

In contrast the above, the system without user authentication will execute a money payment process as follows. To make a payment to a specific vendor of goods or services, the payer inserts his/her electronic wallet device into a machine that manages monetary data of the payee. If his/her electronic wallet contains enough money for the payment, the system immediately withdraws the billed amount from the wallet. This system is advantageous in that the user can complete payments very quickly and easily, without having cash at hand.

The above two systems, however, have their own problems as follows. While being able to avoid fraudulent use, the electronic wallet system with user authentication is slow in processing payment transactions because the system requires user authentication at every transaction even if it is a small payment such as a bus fare and train fare. On the other hand, it is risky to use the electronic wallet system without user authentication for the payments of large amounts of money due to its inability to protect against illegal use by another person. Accordingly, customers have to use cash and various electronic wallet devices depending on the purposes.

### Disclosure of the Invention

Taking the above into consideration, an object of the present invention is to provide an electronic wallet system which not only permits quick transactions but also protects against fraudulent use.

Also, another object of the present invention is to provide an electronic wallet device which not only permits quick transactions but also protects against fraudulent use.

Further, still another object of the present invention is to provide a computer-readable medium storing a monetary data transfer program which not only permits quick transactions but also protects against fraudulent use.

To solve the first problem, according to the present invention, there is provided an electronic wallet system which electronically transfers money from a payer to a payee. This system comprises the following elements: payer monetary data management means for storing and managing payer's monetary data; payee monetary data management means for storing and managing payee's monetary data; verification policy determination means, responsive to a money payment command, for determining whether to execute a user authentication process, based on predefined payment condition criteria; user authentication means for verifying whether a person who is attempting to transfer the payer's monetary data is an authorized owner of the payer's monetary data to be transferred, when the verification policy determination means has determined that the user authentication process is required; and money payment means for transferring the payer's monetary data representing the amount of money that is specified in the money payment command, from the payer monetary data management means to the payee monetary data management means, when the verification policy determination means has determined that no user authentication process is required, or when the user authentication means has successfully verified the authenticity of the user.

According to the proposed electronic wallet system, the verification policy determination means determines whether to execute a user authentication process, when a money payment command is received. If it is determined that a user authentication process is required, the user authentication means verifies that the authorized owner of the payer monetary data management means agrees to transfer the payer's monetary data. When the verification policy determination means has determined that no user authentication process is required, or when the user authentication means has successfully verified the user's authenticity, the money payment means transfers monetary data representing the amount of money that is specified in the money payment command, from the payer monetary data management means to the payee monetary data management means.

Further, to solve the second problem, according to the present invention, there is provided an electronic wallet device which electronically transfers money from a payer to a payee. This device comprises the following elements: payer monetary data management means for storing and managing payer's monetary data; verification policy determination means, responsive to a money payment command, for determining whether to execute a user authentication process, based on predefined payment condition criteria; user authentication means for verifying whether a person who is attempting to transfer the payer's monetary data is an authorized owner of the payer's monetary data to be transferred, when the verification policy determination means has determined that the user authentication process is required; and money payment means for transferring the payer's monetary data representing the amount of money that is specified in the money payment command, from the payer monetary data management means to a location specified in the money payment command, when the verification policy determination means has determined that no user authentication process is required, or when the user authentication means has successfully verified the authenticity of the user.

According to the proposed electronic wallet device, the verification policy determination means determines whether to execute a user authentication process, when a money payment command is received. If it is determined that a user authentication process is required, the user authentication means verifies that the authorized owner of the payer monetary data management means agrees to transfer the payer's monetary data. When the verification policy determination means has determined that no user authentication process is required, or when the user authentication means has successfully verified the user's authenticity, the money payment means transfers monetary data representing the amount of money that is specified in the money payment command, from the payer monetary data management means to a location specified in the money payment command.

Moreover, to solve the third problem, according to the present invention, there is provided a computer-readable medium storing a monetary data transfer program which transfers money from a payer to a payee. The program being designed to run on a computer in order to cause the computer to function as: payer monetary data management means for storing and managing monetary data; verification policy determination means, responsive to a money payment command, for determining whether to execute a user authentication process, based on predefined payment condition criteria; user authentication means for verifying whether a person who is attempting to transfer the payer's monetary data is an authorized owner of the payer's monetary data to be transferred, when the verification policy determination means has determined that the user authentication process is required; and money payment means for transferring the monetary data representing the amount of money that is specified in the money payment command, when the verification policy determination means has determined that no user authentication process is required, or when the user authentication means has successfully verified the authenticity of the user.

When executed by a computer, the monetary data transfer program stored in this medium will cause the computer to function as the following means: payer monetary data management means for storing and managing monetary data; verification policy determination means, responsive to a money payment command, for determining whether to execute a user authentication process, based on predefined payment condition criteria; user authentication means for verifying whether a person who is attempting to transfer the payer's monetary data is an authorized owner of the payer's monetary data to be transferred, when the verification policy determination means has determined that the user authentication process is required; and money payment means for transferring the monetary data representing the amount of money that is specified in the money payment command, when the verification policy determination means has determined that no user authentication process is required, or when the user authentication means has successfully verified the authenticity of the user.

### Brief Description of the Drawings

FIG. 1 is a diagram which shows the principle of the present invention;
FIG. 2 is a diagram which shows the concept of an electronic wallet system;
FIG. 3 is a diagram which shows monetary data stored in an electronic wallet device;
FIG. 4 is a diagram which shows a format of data stored in "Money Management" sub-segment;
FIG. 5 is a diagram which shows an example of purpose management data;
FIG. 6 is a diagram which shows a purpose management lookup table;
FIG. 7 is a diagram which shows an example of a payee management data;
FIG. 8 is a diagram which shows a payee management lookup table;
FIG. 9 is the first half of a flowchart showing a process executed by an electronic wallet device;
FIG. 10 is the second half of the same;
FIG. 11 is the first part of a flowchart showing a payment condition registering/updating process;
FIG. 12 is the second part of the same;
FIG. 13 is the third part of the same;
FIG. 14 is the fourth part of the same;
FIG. 15 is a diagram showing an example screen shot of a payment condition registering/updating menu;
FIG. 16 is a diagram which shows an example of data stored in "Tip Data" subsection;
FIG. 17 is a flowchart which shows a tip payment process;
FIG. 18 is a flowchart which shows a purpose-specific payment process;
FIG. 19 is a flowchart which shows a payee-specific payment process;
FIG. 20 is a flowchart which shows a time-restricted payment process;
FIG. 21 is a flowchart which shows a usage-count-restricted payment process;
FIG. 22 is a flowchart which shows a payment process with user authentication;
FIG. 23 is a flowchart which shows the details of the payment routine; and
FIG. 24 is a flowchart which shows a reset process.

### Best Mode for Carrying out the Invention

An embodiment of the present invention will be described below with reference to the accompanying drawings.

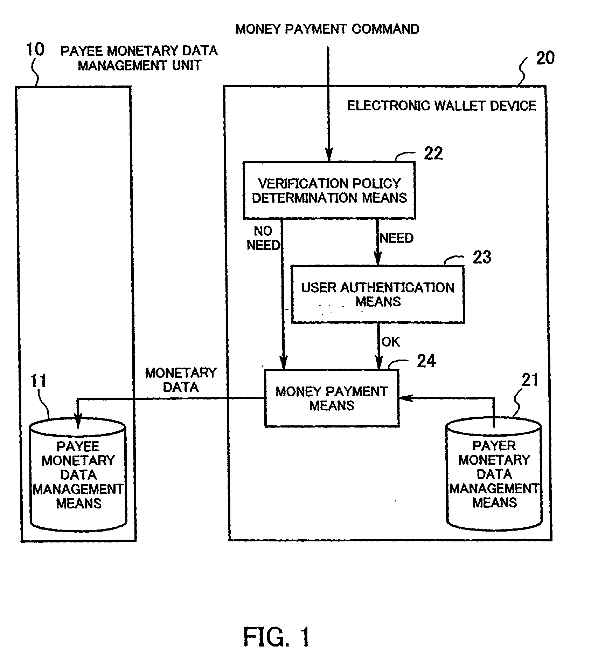

FIG. 1 shows the principle of the present invention. According to the present invention, the proposed electronic wallet system comprises a payee monetary data management unit 10 for money acceptance and an electronic wallet device 20 for money payments. The payee monetary data management unit 10 and electronic wallet device 20 are interconnected by an appropriate interface that complies with prescribed data communications protocols. This interface is designed to allow the electronic wallet device 20 to be attached to and detached from the payee monetary data management unit 10 easily.

The payee monetary data management unit 10 receives monetary data representing the price of a product that is purchased. The payee monetary data management unit 10 employs a payee monetary data management means 11. This payee monetary data management means 11 stores and manages monetary data of a person who receives money from the payer. Every received monetary data will be accumulated in this payee monetary data management means 11. The payee monetary data management unit 10 may be integrated in, for example, an automatic teller machine (ATM) for banking services, an automatic vending machine, and a point-of-sale (POS) terminals.

The electronic wallet device 20 comprises a payer monetary data management means 21, a verification policy determination means 22, and a user authentication means 23, and a money payment means 24. The payer monetary data management means 21 manages monetary data of the owner of the electronic wallet device 20. When a money payment command is received, the verification policy determination means 22 determines whether to execute a user authentication process to verify the owner's authenticity before executing the requested payment, based on some predefined criteria for the payment conditions. Under the predefined criteria, actual payment conditions are evaluated in terms of whether the transaction in question gives a higher priority to the prevention of fraud than the promptness of processing. If the result is positive, the verification policy determination means 22 will initiate a user authentication process. More specifically, to determine whether to execute authentication, the verification policy determination means 22 examines the payee's profile, payment purpose, payment time, and other various conditions. If it is determined that a user authentication process is required, the user authentication means 23 executes the process, thus verifying that the authorized owner agrees to transfer his/her monetary data to the payee. This user authentication may be accomplished by testing a password entered by the owner, or by examining the user's fingerprint, for example. When the verification policy determination means 22 has determined that a user authentication process is not necessary, or when the user authentication means 23 has successfully finished the user authentication, the money payment means 24 sends monetary data to the payee monetary data management unit 10, so as to transfer the amount of money specified in the money payment command.

Suppose that the owner of the electronic wallet device 20 is about to make a payment for a product or service that he/she purchased or received. In this situation, the above-described electronic wallet system operates as follows. First, the payer connects his/her electronic wallet device 20 to the payee monetary data management unit 10 owned by the merchant or service provider. He/she then enters a money payment command to the electronic wallet device 20 to pay the cost being billed. That money payment command is received by the verification policy determination means 22 of the electronic wallet device 20, which determines whether it is necessary to verify the owner accordingly. If the verification is necessary, the user authentication means 23 executes a process to verify whether the authorized owner intends to transfer his/her monetary data. On the other hand, if the verification policy determination means 22 has determined that the verification is not necessary, or if the user authentication means 23 has successfully finished the verification, the money payment means 24 immediately transfers the monetary data representing the amount of money specified in the money payment command, from the payer monetary data management means 21 to the payee monetary data management means 11.

Through the above process, the monetary data can be transferred promptly or securely, depending on the characteristics of the transaction. That is, the proposed system transfers monetary data out of the electronic wallet device 20 without verifying its owner's authenticity, when so determined (i.e., when the promptness of transaction is given a higher priority than the fraud protection). On the other hand, when the owner has to be verified (i.e., when the fraud protection is given a higher priority than the promptness of transaction), the system transfers monetary data only after the authenticity of the owner is successfully verified. This means that fraudulent use of this electronic wallet device 20 could be allowed only for small transactions where the promptness is of a greater importance, and therefore, the possible loss would be minimum. The authorized owner, on the other hand, can fully enjoy the convenience of the electronic wallet device 20 since it allows quick payments without authentication processing in such transactions where promptness comes first.

For the simplicity of explanation, it has been assumed in the above section that the system performs a user authentication process when the transaction gives a higher priority to fraud protection than promptness of transactions. Instead of using that simple standard, the proposed verification policy determination means 22 may also be configured to evaluate given payment conditions in greater detail. The next section will explain a specific embodiment of the present invention which employs more sophisticated criteria for determining the necessity of user authentication.

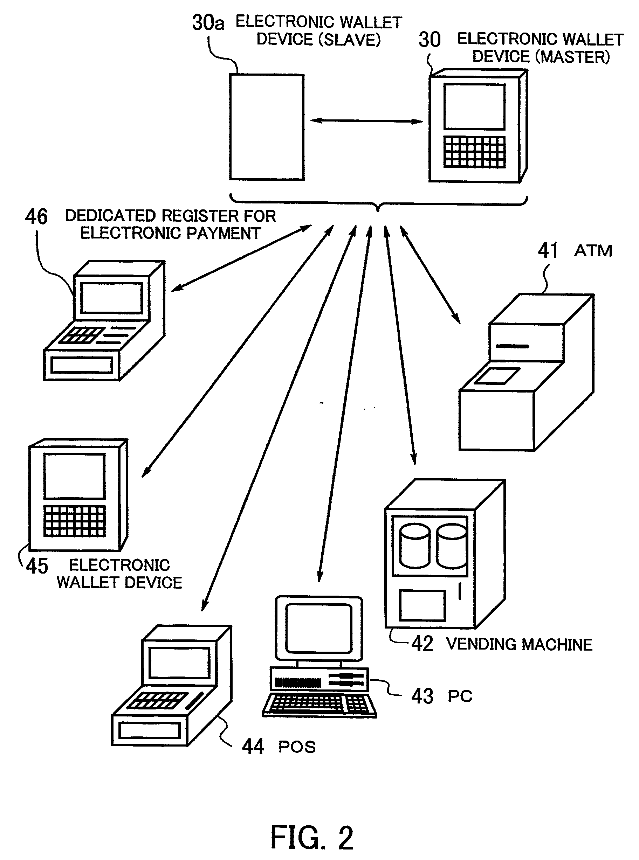

FIG. 2 is a diagram showing the concept of an electronic wallet system. In this illustrated system, an electronic wallet device 30 (master unit) and another electronic wallet device 30a (slave unit) are provided.

Those electronic wallet devices 30 and 30a are microcomputer systems each comprising a processor and memory components. The memory stores some programs to realize specific functions that an electronic wallet device should provide. The processor executes those programs stored in the memory, thereby providing intended functions of the electronic wallet device. The electronic wallet devices 30 and 30a employ an interface for exchanging data.

The master electronic wallet device 30 is further equipped with a network interface, an input device, and a liquid crystal display. The network interface enables access to the banks or other financial institutions where the owner has his/her accounts. The input device comprises a plurality of keys for data and command entry purposes. The slave electronic wallet device 30a is implemented in the form of a portable integrated circuit (IC) card.

What has previously been described as the payee monetary data management unit 10 may be provided in various forms. They include: ATMs 41, vending machines 42, personal computers 43, POS terminals 44, electronic wallet devices 45, and dedicated cash registers 46 for electronic payment. Those devices have an interface to interoperate with the electronic wallet devices 30 and 30a.

The owner of the electronic wallet devices 30 and 30a connects his/her master electronic wallet device 30 to the host computer of his/her bank via a network to withdraw a desired amount of money from his/her account. Actually, this withdrawal causes appropriate monetary data to be transferred to the master electronic wallet device 30. A connection may be made between the master and slave electronic wallet devices 30 and 30a, if desired, to transfer the monetary data from master to slave. Now that the monetary data is loaded, the owner can use his/her electronic wallet device 30 or 30a for payments by electronically transferring money to the ATM 41 and the like.

Suppose, for example, that the owner is buying a soft drink from a vending machine 42. He/she first inserts his/her electronic wallet device 30a to an appropriate slot of the vending machine 42, thereby establishing a connection between them. He/she then presses a pushbutton for the desired soft drink, selecting from among those available in the vending machine 42. This action causes the electronic wallet device 30a to determine whether a user authentication process should be executed to verify the owner of the electronic wallet device 30a. An appropriate verification procedure starts if it is determined that authentication is necessary. This procedure includes a password entry, for example. When the ownership is successfully verified, or when it has previously been determined that no authentication is necessary, the payment is made through a monetary data transfer operation from the electronic wallet device 30a to the vending machine 42 in accordance with the price of the purchased product. Upon completion of the payment, the desired soft drink comes out of the vending machine 42.

The criteria for the decision of whether to execute a user authentication process are predefined and stored in a money management data segment, a part of the memory of the electronic wallet device 30.

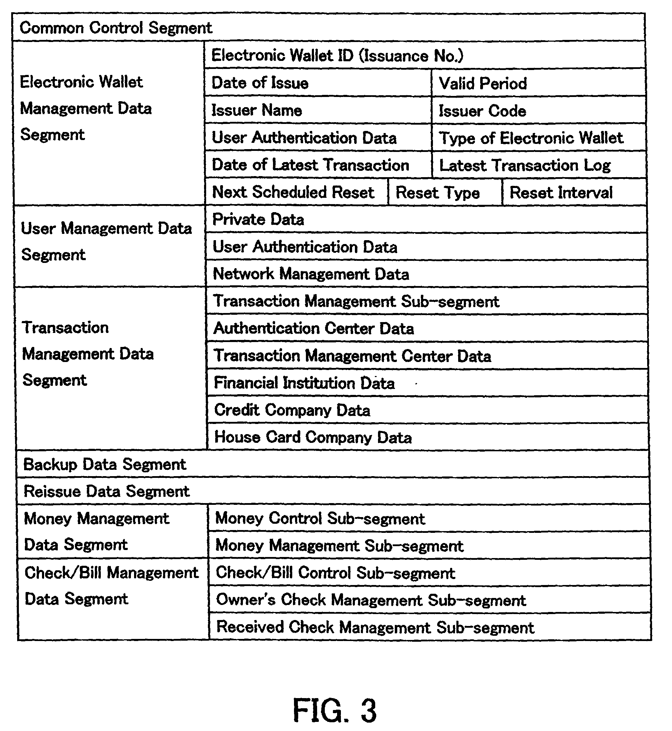

FIG. 3 shows the data stored in the memory of the electronic wallet device 30, which is divided into segments described below.

The "Common Control" segment contains basic control parameters necessary for the electronic wallet device 30 to operate. More specifically, this segment holds memory addresses of various data segments and subsegments described below.

The "Electronic Wallet Management Data" segment contains the following information fields: "Electronic Wallet ID" (Issuance No.), "Date of Issue," "Valid Period," "Issuer Name," "Issuer Code," "User Authentication Data" (e.g., passwords), "Type of Electronic Wallet," "Date of Latest Transaction," "Latest Transaction Log," "Next Scheduled Reset," "Reset Type," and "Reset Interval." The Electronic Wallet ID field contains an identification code that is assigned to each electronic wallet device when it is issued. The Date of Issue field indicates when that electronic wallet device was issued. The Issuer Name field shows the name of the establishment that issued the electronic wallet device. The Issuer Code field contains the identification code of the issuer. The User Authentication Data field contains a special character string that the owner of the electronic wallet device knows exclusively, which is used to authenticate the user of the electronic wallet device. The Type of Electronic Wallet field indicates the current operation mode and I/O mode being set to the electronic wallet. While electronic wallet systems are designed for electronic cash transactions and settlement account (checks and bills) transactions, each individual electronic wallet device may be restricted to either of those two kinds of transactions, or can handle both kinds of transactions, depending on its current operation mode setup. The I/O mode determines whether to enable input/output functions. The Date of Latest Transaction field indicates the date and time of the most recently conducted transaction, including inquiry, and the Latest Transaction Log field holds a log record of that transaction. The Next Scheduled Reset field indicates the next scheduled date for a reset operation. The Reset Type field determines whether the reset operation is to be performed automatically or manually (i.e., through interactive key operations). The Reset Interval field provides the interval of regular reset operations.

The "User Management Data" segment is divided into the following three parts: "Private Data" sub-segment, "User Authentication Data" sub-segment, and "Network Management Data" sub-segment. The Private Data sub-segment contains the owner's private information, including his/her name, sex, and address. The User Authentication Data sub-segment contains digital signature or like information. The Network Management Data sub-segment contains network address information and the owner's identification code.

The "Transaction Management Data" segment is divided into the following parts: "Transaction Management" sub-segment, "Authentication Center Data," "Transaction Management Center Data," "Financial Institution Data," "Credit Company Data," and "House Card Company Data." The Transaction Management sub-segment contains the memory addresses of various information resources necessary for transaction management. The Authentication Center Data field contains the name and identification code of an authentication center. The Transaction Management Center Data field contains the name and identification code of a transaction management center. The Financial Institution Data field contains the name and identification code of a financial institution. The Credit Company Data field contains the name and identification code of a credit company. The House Card Company Data field contains the name and identification code of a house card company.

The "Backup data" segment stores information that is necessary to back up the data stored in the electronic wallet device. It includes backup conditions (e.g., interval for regular backup) and history records of backup operations performed in the past, for example.

The "Reissue Data" segment stores history records of re-issuance of electronic wallet devices resulting from loss, failure, or any other reason. More specifically, it includes the number of past instances of re-issuance and the date of the latest re-issuance.

The "Money Management Data" segment comprises "Money Control" and "Money Management" sub-segments. The details of those sub-segments will be provided later.

The "Check/Bill Management Data" segment comprises the following sub-segments: "Check/Bill Control, "Owner's Check Management," and "Received Check Management." The Check/Bill Control sub-segment contains the memory addresses of various information resources necessary for managing checks and bills. The Owner's Check Management sub-segment contains the name of a financial institution where the owner has his/her checking account, as well as the credit limit given to the owner. The Received Check Management sub-segment contains information about received checks, including the name of the financial institution that issued each check and the face value of that check.

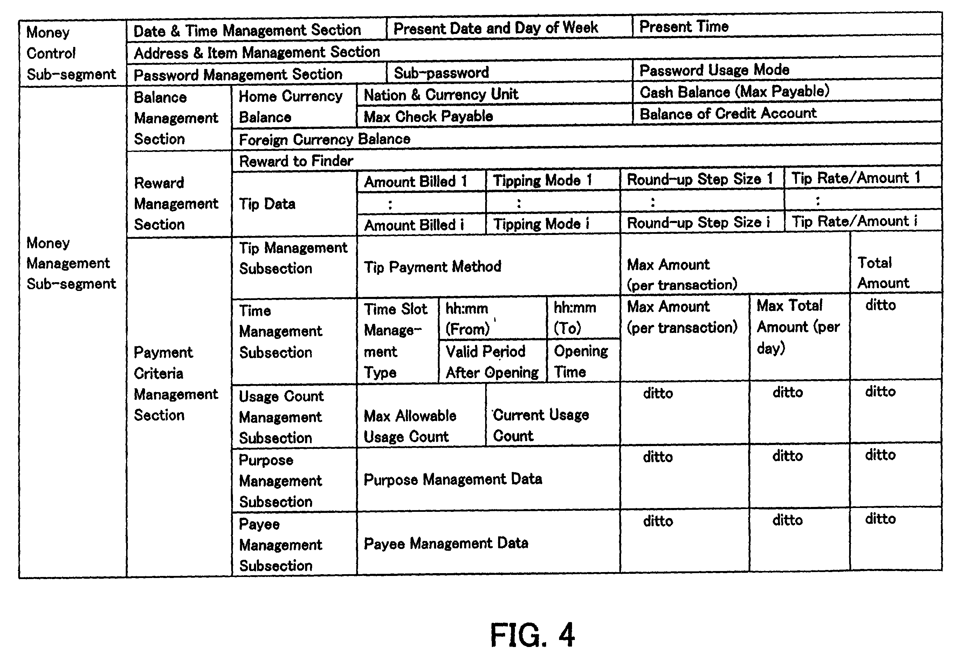

FIG. 4 shows a data format of the Money Management Data segment. This Money Management Data segment comprises "Money Control" and "Money Management" sub-segments.

The Money Control sub-segment is further divided into "Date & Time Management" section, "Address & Item Management" section, and "Password Management" section. The Date & Time Management section contains the present date and time and the day of week. The Address & Item Management section contains the memory addresses of various data items and the management information for the same. The Password Management section contains sub-passwords and other information about how to use passwords (e.g., whether to use the sub-passwords).

The Money Management sub-segment comprises "Balance Management" section, "Reward Management" section, and "Payment Criteria Management" section. The Balance Management section contains the home currency balance and foreign currency balance. The home currency balance contains the name of a nation, kind of currency, the cash balance (maximum amount payable), the maximum check payable, the balance of the credit account. The owner may have a plurality of different foreign currency accounts. In that case, the foreign currency balance stores information separately for each currency.

The Reward Management section contains "Reward to Finder" information and "Tip Data." The Reward to Finder information indicates how much money should be given to a person who found a lost electronic wallet device. The Tip Data subsection is referenced when the owner gives a tip for some service received at a hotel, for example. The data contained in this field are: the amount of money being billed, tipping mode, round-up step size, and tip rate or tip amount.

The Payment Criteria Management section is divided into the following subsections: "Tip Management," "Time Management," "Usage Count Management," "Payment Purpose Management," and "Payee Management." The Tip Management subsection contains information such as tip payment methods, the maximum allowable amount of a tip, and the total amount of tips. Here, the tip payment method refers to a choice of whether to include a tip in the bill or pay it separately from the billed cost. When a tip is to be paid separately from the billed cost, the tip data has to be added an appropriate identification header.

The Time Management subsection indicates a time slot management type, which takes a value of "0," "1," or "2." The first type value "0" denotes that the time slot in question is not used. The type value "1" denotes that the time slot is defined with absolute times. The type value "1" denotes that the time slot is defined with relative times measured from the opening time. When its type is set to "1," the time slot is specified by a start time ("From") and end time ("To") parameters, during which the electronic wallet device can be used for payment without user authentication. When its type is set to "2," the time slot is defined as a valid period after the electronic wallet device is opened. The opening time itself is also recorded as a parameter in this subsection. Other parameters included in the subsection are: the maximum allowable amount per transaction, the maximum allowable total amount per day, and the total amount of payments.

The Usage Count Management subsection contains another set of parameters about the payment without user authentication, which includes: the maximum allowable number of payments (i.e., maximum usage count), the actual number of payments (i.e., current usage count), the maximum allowable amount per transaction, the maximum allowable total amount per day, and the total amount of payments. The Payment Purpose Management subsection contains the following items: purpose management data, the maximum allowable amount per transaction, the maximum allowable total amount per day, and the total amount of payments. The Payee Management subsection contains payee management data, the maximum allowable amount per transaction, the maximum allowable total amount per day, and the total amount of payments.

The Payment Purpose Management and Payee Management sub-sections will now be described in greater detail below.

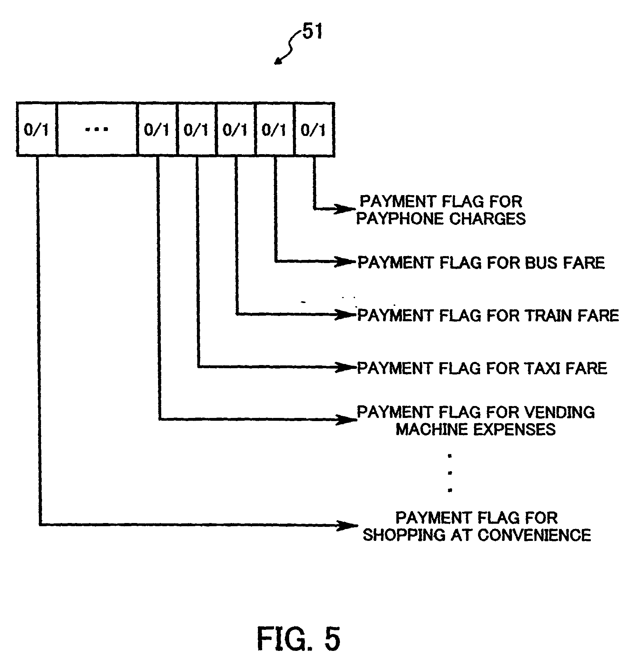

FIG. 5 shows an example of the payment purpose management data. This payment purpose management data 51 is composed of a plurality of flag bits each representing a specific kind of payment for which an electronic wallet device is used. If a flag bit is set to "1," the corresponding payment can be processed without user authentication. If a flag bit is set to "0," the corresponding payment requires user authentication. The illustrated data shows the necessity of user authentication concerning the following specific kinds of money payments: payphone charges, bus fare, train fare, taxi fare, vending machine charges, and shopping expenses at convenience stores.

The relationship between each flag bit of the payment purpose management data and a specific payment purpose is maintained in a purpose management lookup table.

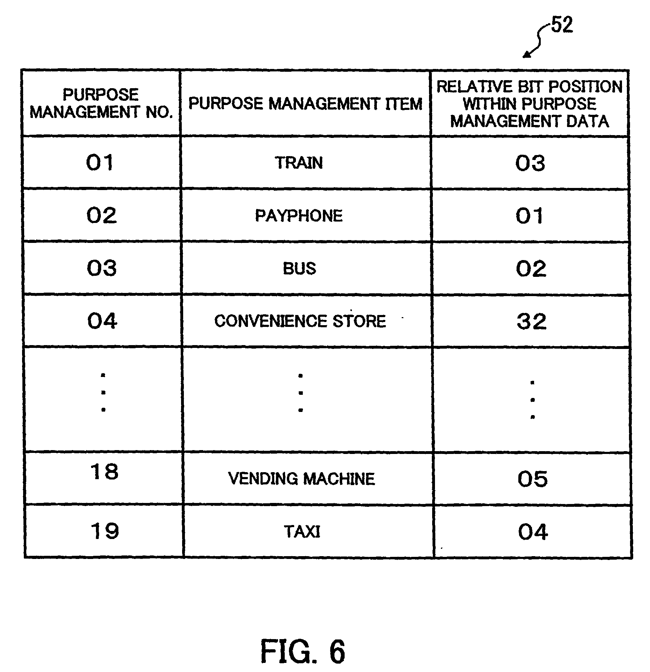

FIG. 6 is a diagram showing a purpose management lookup table. This purpose management lookup table 52 provides three columns entitled "Purpose Management Number," "Purpose Management Item," and "Relative Bit Position within Purpose Management Data." Each entry represents a different usage of the electronic wallet device.

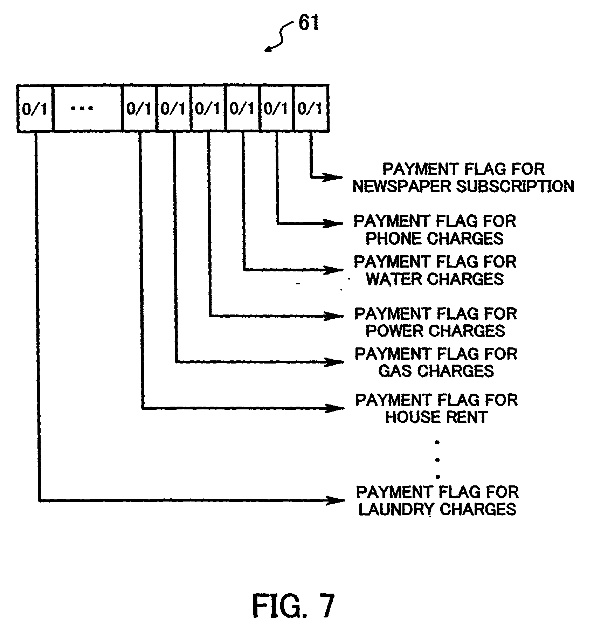

FIG. 7 is a diagram showing an example of a payee management data. This payee management data 61 is composed of a plurality of flag bits each representing a specific payee. If a flag bit is set to "1," the payment to the corresponding payee can be processed without user authentication. If a flag bit is set to "0," the payment to the corresponding payee requires user authentication. The illustrated data shows the necessity of user authentication concerning the following specific types of payment transactions: newspaper subscription, phone charges, water charges, power charges, gas charges, house rent, and laundry charges. Those transactions are related to particular companies or distributors, which collect money for their products and services. The electronic wallet device can be used for the payment to such particular establishments without the need for user authentication.

The relationship between each flag bit of the payee management data and a specific payee is maintained in a payee management lookup table.

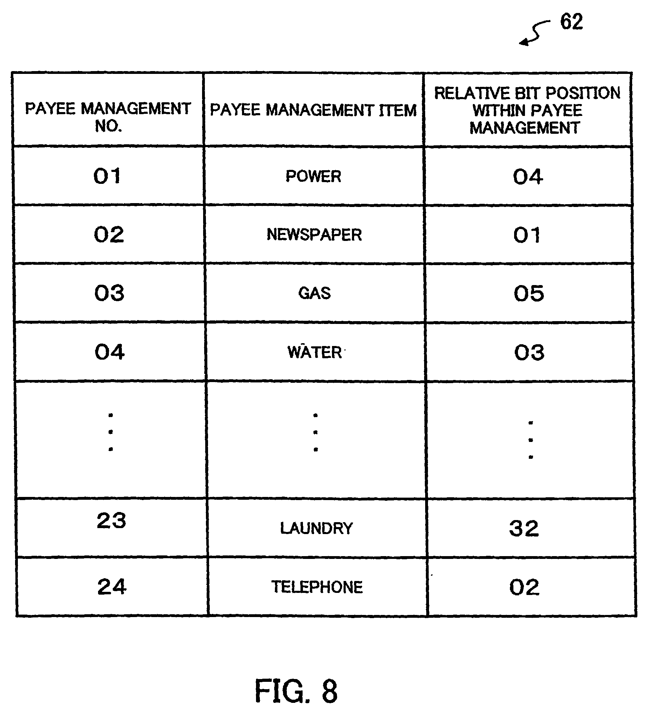

FIG. 8 is a diagram showing a payee management lookup table. This payee management lookup table 62 has three columns entitled "Payee Management No.," "Payee Management Item," and Relative Bit position within Payee Management Data." Each entry provides information about a different payee.

The electronic wallet device 30 executes a payment process, based on the above-described data and tables, as will be described below. Throughout the following explanation of flowcharts, it should be assumed that all the processing steps are executed by the proposed electronic wallet device, unless otherwise noted.

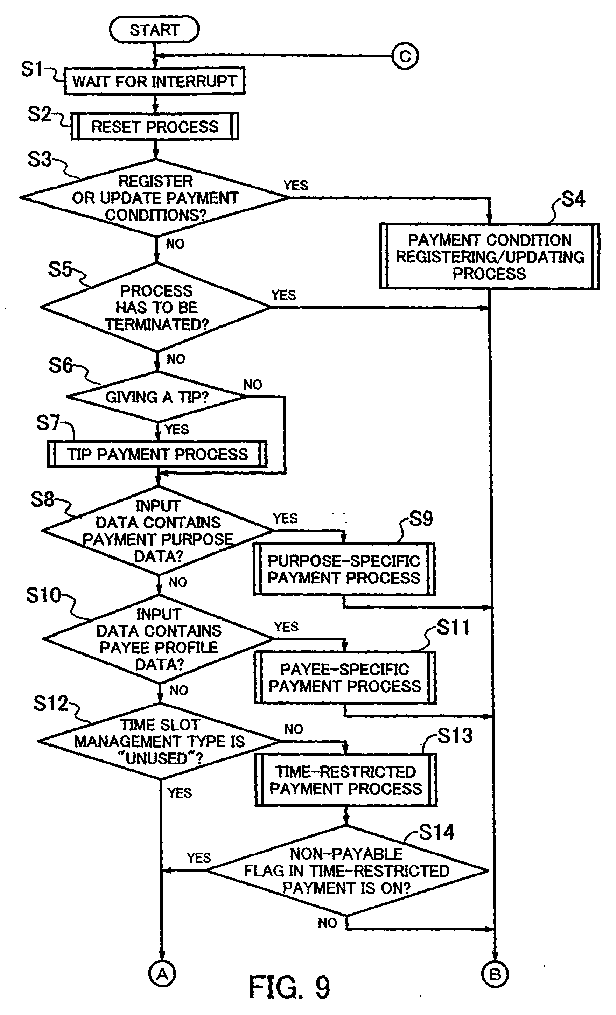

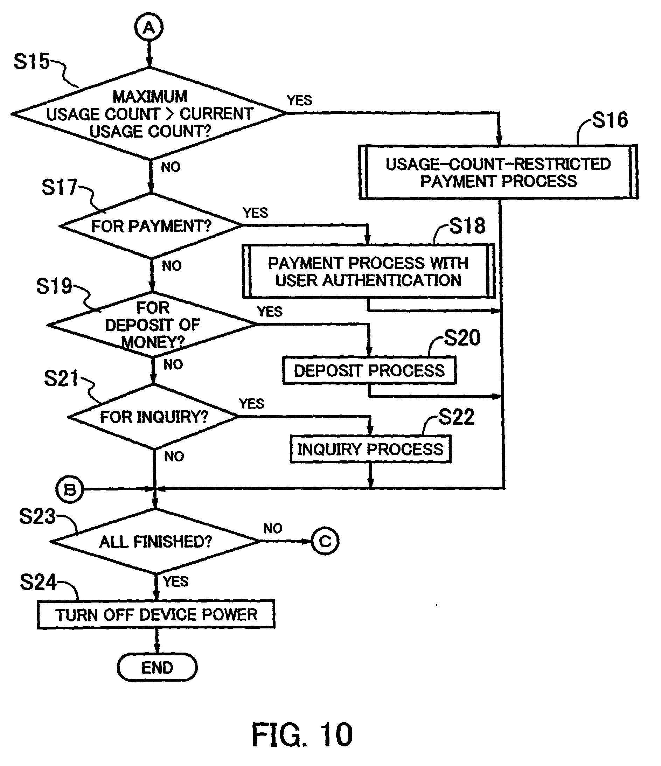

FIG. 9 is the first half of a flowchart showing a process executed by the electronic wallet device. This process starts when the electronic wallet device 30 is powered up.
(S1) The electronic wallet device is waiting for input data (interrupt). Suppose here that the device is interrupted by a signal sent from a terminal through a link, which carries attribute information of an intended payee and also indicates how much money should be paid. The attribute information includes the following data elements: the intended payment purpose, and the name, address, phone number, and identification code of the payee.
(S2) The device executes a reset process, thereby resetting the current usage count and the total amount of payments if the device is enabled for the first time on the day.
(S3) The device determines whether a payment condition registering/updating process is demanded. If so, the process branches to step S4. If not, the process advances to step S5.
(S4) The device executes a payment condition registering/updating process. The process then proceeds to step S23 (FIG. 10).
(S5) The device determines whether the process has to be terminated. If so, the process branches to step S23. If it has to continue, the process advances to step S6.
(S6) The device determines whether the user is giving a tip. If so, the process advances to step S7. If not, the process skips to step S8.
(S7) The device executes a tip payment process.
(S8) The device determines whether the input data contains payment purpose data. If so, the process branches to step S9. If not, the process advances to step S10.
(S9) The device executes a purpose-specific payment process and then proceeds to step S23. In this purpose-specific payment process, the device first obtains the payee's terminal attribute from terminal interface data when it is linked to the payee's terminal. If the obtained attribute is found in the purpose management data, and if the corresponding flag is set to "1," the device pays the billed charge. The payment is performed automatically (if so instructed by the terminal) or manually (when the terminal gives no such instruction).
(S10) The device determines whether the input data contains payee profile data. If so, the process branches to step S11. If not, the process advances to step S12.
(S11) The device executes a payee-specific payment process and then proceeds to step S23. In this payee-specific payment process, the device first obtains the payee's attribute information from terminal interface data when it is connected to the payee's terminal (e.g., ATM). If the obtained attribute is found in its payee management data, and if the corresponding flag is set to "1," the device pays the billed charge automatically or manually, without performing user authentication.
(S12) The device determines whether the time slot management type is set to "unused." If so, the process advances to step 15 (FIG. 10). If not, the process branches to step S13.
(S13) The device executes a time-restricted payment process and then proceeds to step S14.
(S14) The device determines whether the non-payable flag concerning time-restricted payment is set to "ON." If so, the process advances to step S15 (FIG. 10). If not set, the process proceeds to step S23.

FIG. 10 is the second half of the flowchart showing a process executed by the electronic wallet device.
(S15) The device determines whether the maximum allowable usage count is greater than the current usage count. If so, the process branches to step S16. If not, the process advances to step S17. It is considered here that the current usage count will not be incremented until the monetary data is transferred and other necessary processing is finished. This means that a payment can be made if the maximum allowable usage count exceeds the current usage count by at least one.
(S16) The device executes a usage-count-restricted payment process and proceeds to step S23.
(S17) The device determines whether the present process is a money payment transaction. If so, the process branches to step S18. If not, the process advances to step S19.
(S18) The device executes a payment process with user authentication. It then proceeds to step S23.
(S19) The device determines whether the present process is a deposit transaction. If so, the process advances to step S19. If not, the process advances to step S21.
(S20) The device executes a deposit process and proceeds to step S23.
(S21) The device determines whether the present process is an inquiry transaction. If so, the process branches to step S22. If not, the process advances to step S23.
(S22) The device executes an inquiry process.
(S23) The device determines whether the current session with the electronic wallet device is all, finished. If so, the process advances to step S24. If the owner wishes to continue to use the device for another transaction, the process returns to step S1 (FIG. 9).
(S24) The power to the electronic wallet device is removed.

While the above section has described the entire procedure implemented in an electronic wallet system, the next section will now provide the details of several distinct processes in the present invention.

First, the payment condition registering/updating process will be described in detail below.

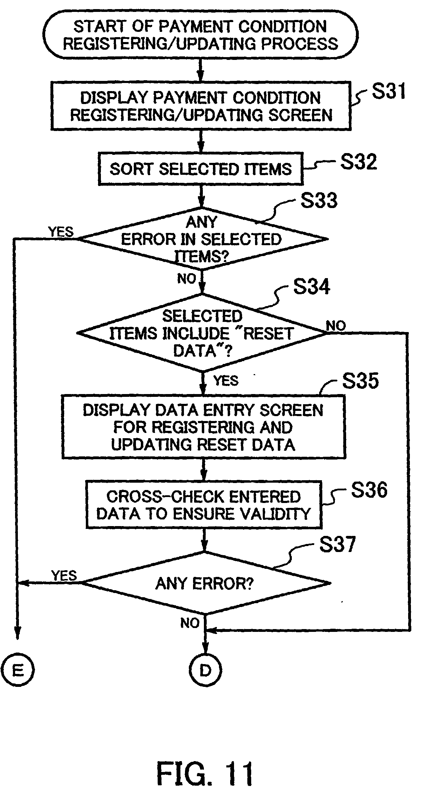

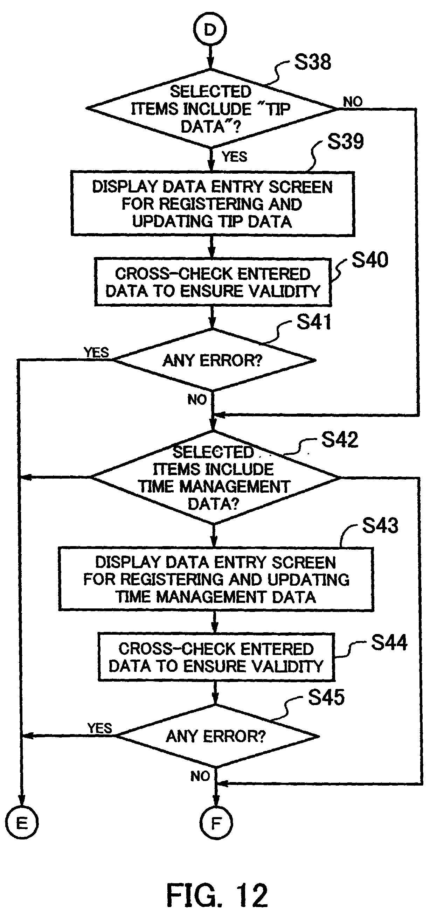

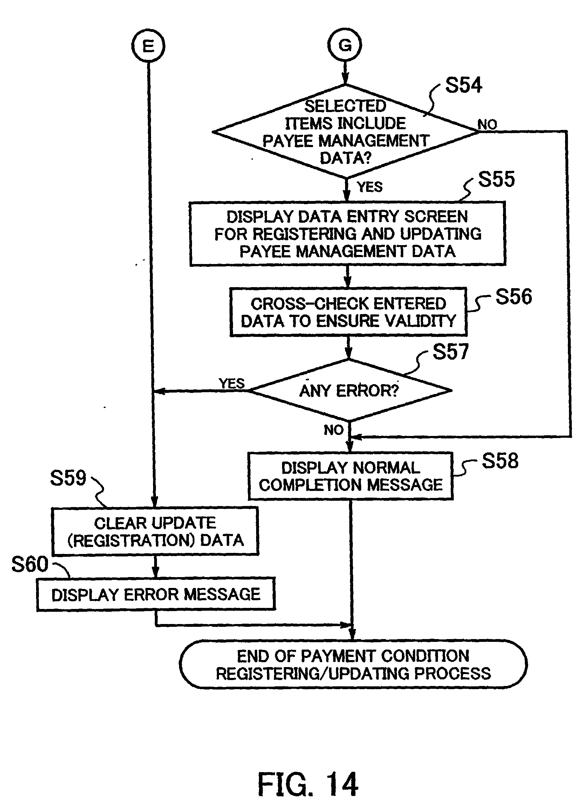

FIG. 11 is the first part of a flowchart showing the payment condition registering/updating process.
(S31) The electronic wallet device displays a data entry screen for registering and updating payment condition.
(S32) The user selects and enters his/her desired items, and the device sorts the selected items.
(S33) The device determines whether the selected items have any error. If there is an error, the process branches to step S59 (FIG. 14). If no error is found, the process proceeds to step S34.
(S34) The device determines whether the selected items include "Reset Data." If so, the process advances to step S35. If not, the process skips to step S38 (FIG. 12).
(S35) The device displays a data entry screen for registering and updating the reset data.
(S36) The user enters data, and the device cross-checks the entered data to ensure its validity.
(S37) The device determines whether there is any error in the entered data. If there is an error, the process branches to step S59. If no error is found, the process proceeds to step S38.

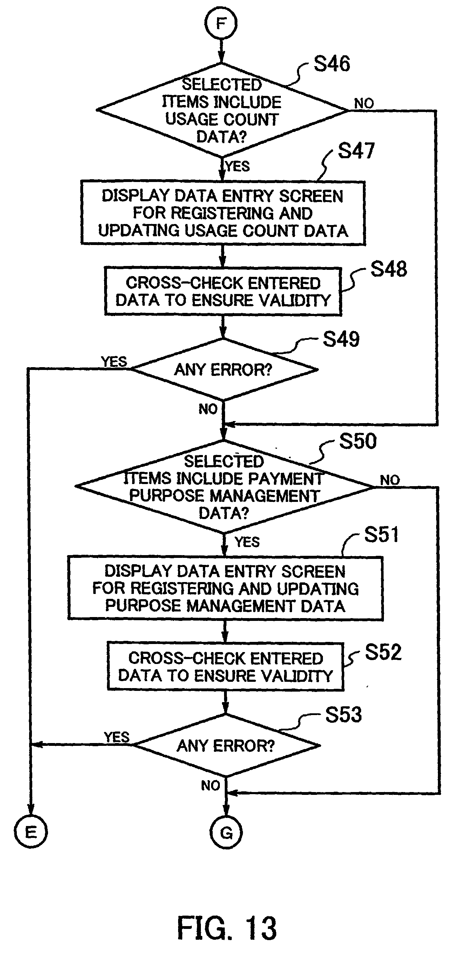

FIG. 12 is the second part of the flowchart showing the payment condition registering/updating process.
(S38) The device determines whether the selected items include "Tip Data." If so, the process advances to step S39. If not, the process skips to step S42.
(S39) The device displays a data entry screen for registering and updating the tip data.
(S40) The user enters data, and the device cross-checks the entered data to ensure its validity.
(S41) The device determines whether there is any error in the entered data. If there is an error, the process branches to step S59. If no error is found, the process proceeds to step S42.
(S42) The device determines whether the selected items include time management data. If so, the process advances to step S43. If not, the process skips to step S46 (FIG. 13).
(S43) The device displays a data entry screen for registering and updating time management data.
(S44) The user enters data, and the device cross-checks the entered data to ensure its validity.
(S45) The device determines whether there is any error in the entered data. If there is an error, the process branches to step S59. If no error is found, the process proceeds to step S46.

FIG. 13 is the third part of the flowchart showing the payment condition registering/updating process.
(S46) The device determines whether the selected items include "Usage Count Data." If so, the process advances to step S47. If not, the process skips to step S50.
(S47) The device displays a data entry screen for registering and updating the usage count data.
(S48) The user enters data, and the device cross-checks the entered data to ensure its validity.
(S49) The device determines whether there is any error in the entered data. If there is an error, the process branches to step S59. If no error is found, the process proceeds to step S50.
(S50) The device determines whether the selected items include "Purpose Management Data." If so, the process advances to step S51. If not, the process skips to step S54 (FIG. 14).
(S51) The device displays a data entry screen for registering and updating the purpose management data.
(S52) The device cross-checks the entered data to ensure its validity.
(S53) The device determines whether there is any error in the entered data. If there is an error, the process branches to step S59. If no error is found, the process proceeds to step S54.

FIG. 14 is the fourth part of the flowchart showing the payment condition registering/updating process.
(S54) The device determines whether the selected items include payee management data. If so, the process advances to step S55. If not, the process skips to step S58.
(S55) The electronic wallet device displays a data entry screen for registering and updating payee management data.
(S56) The device cross-checks the entered data to ensure its validity.
(S57) The device determines whether there is any error in the entered data. If there is an error, the process branches to step S59. If no error is found, the process proceeds to step S58.
(S58) The device displays a message to indicate the normal completion.
(S59) The device clears the entered update (registration) data.
(S60) The device displays an error message and exits from the process.

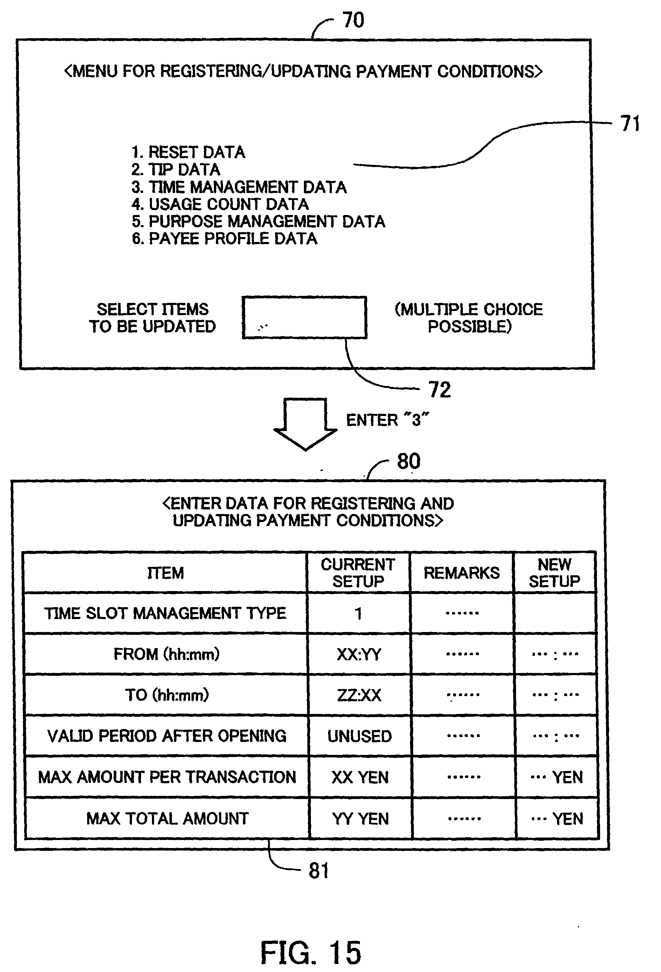

FIG. 15 is a diagram showing an example screen shot of a payment condition registering/updating menu. This screen 70 provides an item list 71 showing what payment conditions can be registered and updated, each item being preceded by a reference number. Under the item list 71, there is a text box 72 for item selection. By entering the reference numbers into this text box 72, the user can select his/her desired items. Suppose here that the user enters the number "3" to the text box 72. This action calls up a data entry screen 80 for registering and updating the time management data.

The data entry screen 80 presents a table 81 to which the user can enter specific values to register or update the time management data. The table 81 comprises the following columns: Item," "Current Setup, "Remarks," and "New Setup." The "Item" column shows the names of various parameters to be updated. The "Current Setup" column shows the current values of those parameters. The "Remarks" column provides a brief description for each parameter. The "New Setup" column accepts new values to which the parameters will be changed.

The next section will now provide the details of the tip payment process.

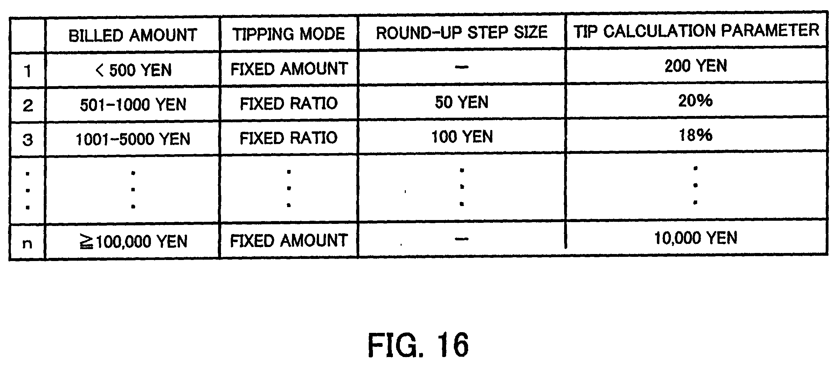

FIG. 16 is a diagram showing an example of data stored in the Tip Data subsection. As this example shows, tips are calculated on the basis of different tipping modes, round-up step sizes, and tip calculation parameters, depending on how much money is being billed.

There are two tipping modes: fixed amount mode and fixed rate mode. In the fixed amount mode, a certain fixed amount of money is given as a tip when the billed amount is within a predefined range. In the fixed rate mode, a fixed percentage of the billed amount is paid as a tip. When calculating a tip in the fixed rate mode, any fractional amount of money less than a predetermined level is rounded up according to a given round-up step size parameter. The tip calculation parameter gives an absolute tip amount in the fixed amount mode. In the fixed rate mode, it suggests what percentage of the billed amount should be paid.

According to the illustrated setup, tips are calculated in the fixed amount mode when the billed amount is less than 500 yen or not less than 100,000 yen. When the billed amount is within the range between 500 yen and 99,999 yen, tips are calculated in the fixed rate mode, where the applicable rate is gradually lowered as the billed amount increases.

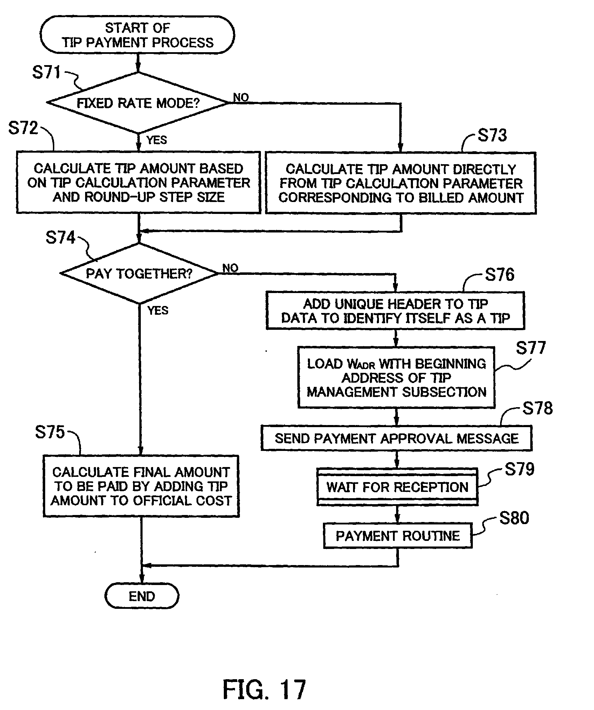

FIG. 17 is a flowchart of the tip payment process.
(S71) The electronic wallet device determines whether the tip should be calculated in the fixed rate mode. If so, the process advances to step S72. If not, the process proceeds to step S73.
(S72) Based on the tip calculation parameter and roundup step size, the device calculates the tip amount. The process then advances to step S74.
(S73) Since it is in the fixed amount mode, the device determines the tip amount by directly using the value of the tip calculation parameter corresponding to the billed amount.
(S74) The device determines whether the tip payment method is set to "pay together" (i.e., paying a tip together with the official cost). If so, the process advances to step S75. If not, the process proceeds to step S76.
(S75) The device adds the calculated tip amount to the official cost being billed, thus yielding monetary data representing the final amount to be paid. It further adds to that monetary data a piece of information to identify the destination of the tip. This additional information may be (a) the payment date and time and the table number, or (b) the identification number of the waiter/waitress who served the payer, in the case of paying for the meal taken in a restaurant. The tip amount added to the official cost will be actually paid in another process that follows (e.g., purpose-specific payment process).
(S76) The device calculates the tip amount alone and creates appropriate monetary data for that amount. The data is further added a unique header to identify itself as tipping information, as well as a piece of information to specify the destination of the tip.
(S77) The device loads a variable W_{ADR} with the beginning address of the Tip Management subsection.
(S78) The device sends a payment approval message.
(S79) The device enters a reception waiting state.
(S80) The device pays the tip after receiving a final approval from the owner.
In this way, the electronic wallet device automatically calculates an appropriate tip amount and conducts the payment.

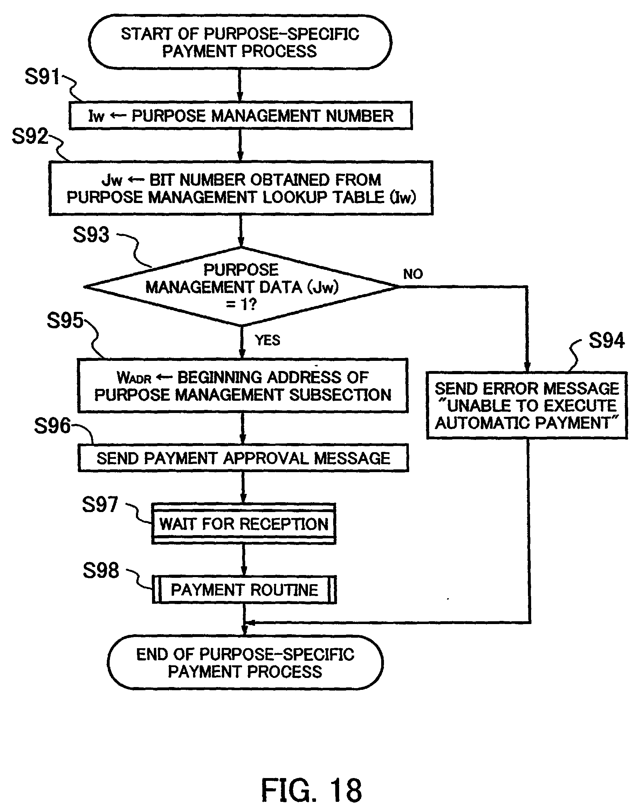

FIG. 18 Is a flowchart of the purpose-specific payment process.
(S91) The device loads a variable I_{w} with a purpose management number associated with the payment purpose specified in the input data.
(S92) The device searches the purpose management lookup table for a record containing the I_{w} value in its purpose management number field and loads a variable J_{w} with the bit number extracted from that record.
(S93) The device determines whether the flag bit #J_{w} of the purpose management data is set to "1." If it is "1," the process advances to step S95. If It is "0," the process branches to step S94.
(S94) The device sends an error message to indicate that it is unable to execute an automatic payment.
(S95) The device loads a variable W_{ADR} with the beginning address of the Purpose Management subsection.
(S96) The device sends a payment approval message.
(S97) The device enters to a reception waiting state.
(S98) The device calls a payment routine after receiving a final approval from the owner.
In this way, the electronic wallet device conducts a money payment, skipping user authentication if the purpose of the payment is among those specified in the purpose management data.

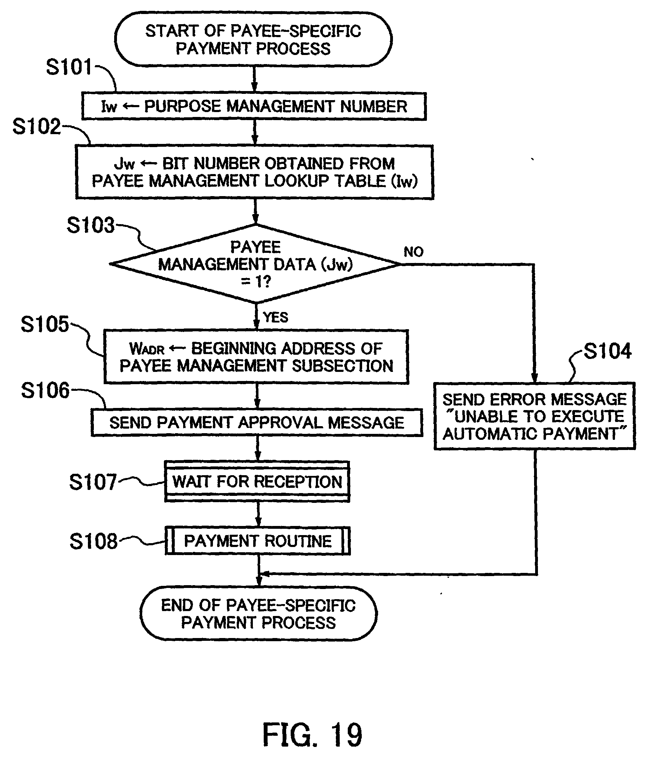

FIG. 19 is a flowchart of the payee-specific payment process.
(S101) The device loads a variable I_{w} with the payee management number of a payee specified in the input data.
(S102) The device searches the payee management lookup table for a record containing the I_{w} value in its payee management number field and loads a variable J_{w} with the bit number extracted from that record.
(S103) The device determines whether the flag bit #J_{w} of the payee management data is set to "1." The payee's name, phone number, and address are also verified when there is a registered record containing such information. If the flag bit is "1" and if the payee's identity is verified, the process advances to step S105. Otherwise, the process goes to step S104.
(S104) The device sends an error message to indicate that it is unable to execute an automatic payment.
(S105) The device loads a variable W_{ADR} with the beginning address of the Payee Management subsection.
(S106) The device sends a payment approval message to the payee monetary data management unit.
(S107) The device enters to a reception waiting state.
(S108) The device calls the payment routine after receiving a final approval from the owner.
In this way, the electronic wallet device conducts a money payment, skipping user authentication if the payee is among those specified in the payee management data.

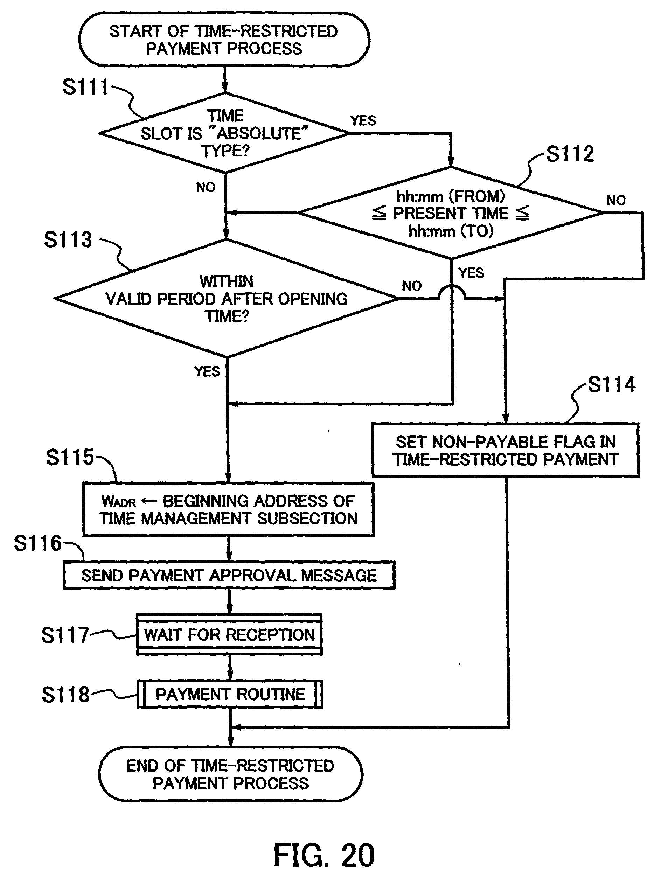

FIG. 20 is a flowchart of the time-restricted payment process.
(S111) The device determines whether the time slot being managed is "absolute" type. If so, the process advances to step S112. If not, the process proceeds to step S113.
(S112) The device determines whether a condition "hh:mm (from) ≤ present time ≤ hh:mm (to)" is satisfied. If this condition is satisfied, the process advances to step S115. If not satisfied, the process proceeds to step S114.
(S113) The device determines whether the present time is within the specified valid period after the opening time. If it is before the valid time expires, the process advances to step S115. If the valid period has already expired, the process branches to step S114.
(S114) The device turns on the non-payable flag concerning the time-restricted payment.
(S115) The device loads a variable W_{ADR} with the beginning address of the Time Management subsection.
(S116) The device sends a payment approval message to the payee monetary data management unit.
(S117) The device enters to a reception waiting state.
(S118) The device calls the payment routine if so requested by the payee monetary data management unit.
In this way, the electronic wallet device conducts a money payment, skipping user authentication if the present time is within a predefined valid period, which is specified with absolute times or relative times with respect to the opening time.

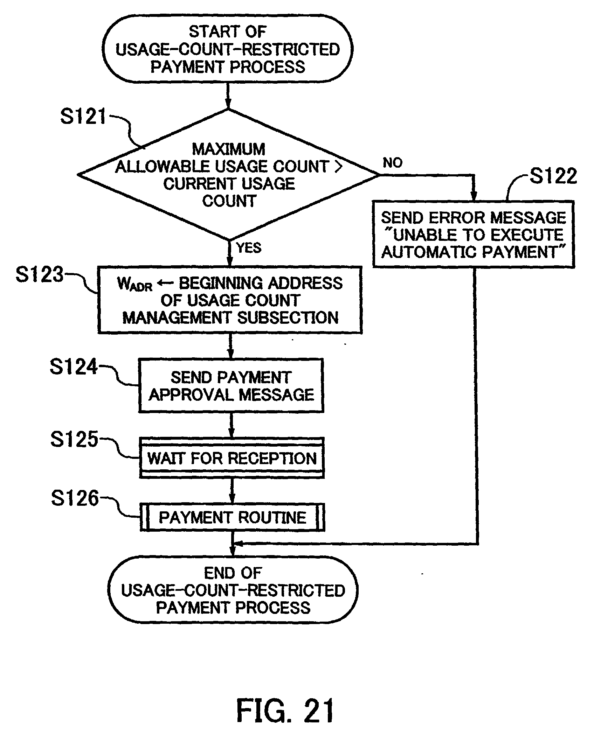

FIG. 21 is a flowchart of the usage-count-restricted payment process.
(S121) The device determines whether the maximum allowable usage count is greater than the current usage count. The current usage count indicates the number of payment transactions performed, which includes the previous transaction, but not the current transaction in process. If the maximum allowable usage count is greater than the current usage count, the process advances to step S123. If not, the process branches to step S122.
(S122) The device sends an error message to indicate that it is unable to execute an automatic payment.
(S123) The device loads a variable W_{ADR} with the beginning address of the Usage Count Management subsection.
(S124) The device sends a payment approval message to the payee monetary data management unit.
(S125) The device enters to a reception waiting state.
(S126) The device calls the payment routine after receiving a final approval from the owner.
In this way, the electronic wallet device conducts a money payment, skipping user authentication if the current usage count has not yet reached a predetermined limit.

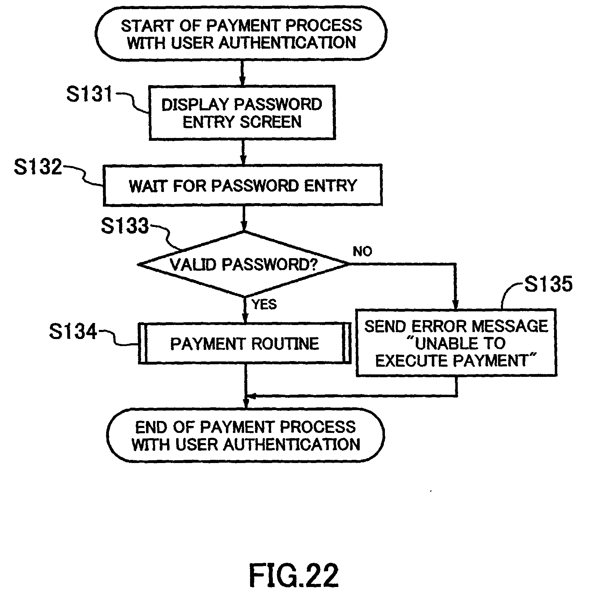

FIG. 22 is a flowchart of the payment process with user authentication.
(S131) The device displays a password entry screen.
(S132) The device waits for password entry.
(S133) The device compares the entered password with the one previously registered. If they agree with each other, the process advances to step S134. If not, the process proceeds to step S135.
(S134) The device calls a payment routine and exits from the current process.
(S135) The device sends an error message indicating that it is unable to execute the payment, and exits from the current process.

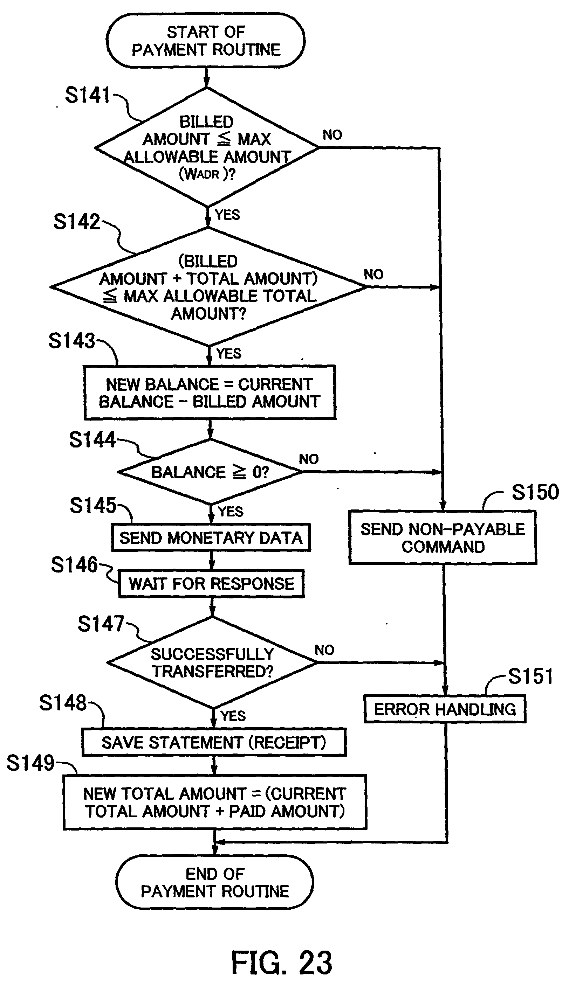

The FIG. 23 is a flowchart which shows the details of the payment routine.
(S141) Referring to a data subsection that is pointed by the variable W_{ADR}, the device determines whether the billed amount is not greater than the maximum allowable amount. If this is true, the process advances to step S142. If the billed amount exceeds the maximum allowable amount, the process branches to step S150. Note that this step does not apply, when the routine is called by the payment process with user authentication at step S134 of FIG. 22.
(S142) Referring to a data subsection that is pointed by the variable W_{ADR}, the device reads out the maximum allowable total amount of payments and the total amount of payments made in the past. The device then determines whether the sum of the billed amount and the total amount of the past payments is not greater than the maximum allowable total amount. If that sum is not greater than the limit, the process advances to step S143. If the sum exceeds the limit, the process branches to S150. Note that this step does not apply, when the routine is called by the tip payment process at step S80 of FIG. 17, or by the payment process with user authentication at step S134 of FIG. 22.
(S143) The device updates the current balance by subtracting the billed amount therefrom.
(S144) The device determines whether the current balance is equal to or greater than zero. If so, the process advances to step S145. If not, the process branches to step S150.
(S145) The device sends monetary data to the payee monetary data management unit to indicate the amount of money to be paid.
(S146) The device waits for the response. The owner of the electronic wallet device makes a final check on the content of the transaction and approves the payment by operating an appropriate input device.
(S147) Receiving and parsing a response message from the payee monetary data management unit, the electronic wallet device determines whether the monetary data has been successfully transferred. If the data transfer was successful, the process advances to step S148. If it was not successful, the process proceeds to step S151.
(S148) The device receives a statement (receipt) describing the finished payment transaction and stores it as a record. By automatically maintaining such statements (receipts), the device helps the owner to avoid making duplicate payments for the same goods or service. The maximum payable amount may be defined separately for different kinds of payments. By doing so, the owner can minimize the possible loss of his/her money even if the device is fraudulently used by another person.
(S149) The device updates the record of the total amount of payments by adding the paid amount to the current value, as well as incrementing the current usage count by one.
(S150) The device sends a "non-payable" command to the payee monetary data management unit to indicate that it is unable to execute the requested payment.
(S151) The device performs an appropriate error handling operation, accordingly.
In this way, the electronic wallet device accomplishes a money payment as long as the billed amount is within a predetermined limit of maximum allowable amount per transaction and maximum allowable total amount. Here, user authentication is skipped if some specific conditions are met.

Lastly, the following section will describe the reset process in detail.

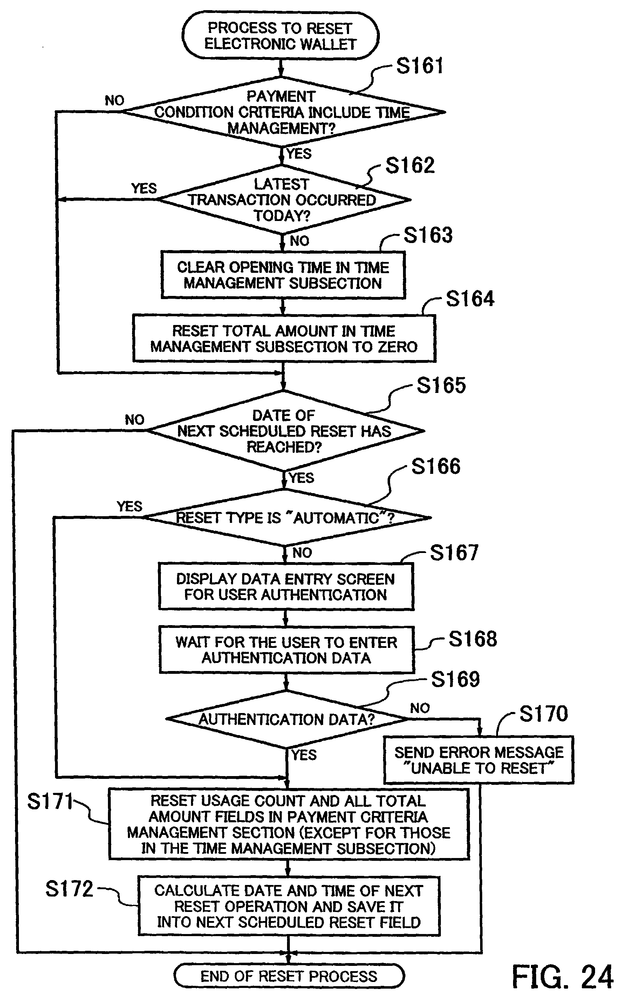

FIG. 24 is a flowchart of the reset process. This process is executed by the electronic wallet device.
(S161) The device determines whether the current payment condition criteria include a requirement of time management of payments. More specifically, it determines whether a certain time value is specified in the Valid Period After Opening field of the Time Management subsection. If so, the process advances to step S162. If not, the process skips to step S165.
(S162) The device determines whether the date of the latest electronic wallet transaction coincides with the present date. If so, the process skips to step S165. If not, the process advances to step S163.
(S163) The device clears the Opening Time field in the Time Management subsection.
(S164) The device resets the Total Amount field in the Time Management subsection to zero.
(S165) The device determines whether the Next Scheduled Reset field indicates a specific date and it is before the present date. If the date indicated in that field has already passed or has just been reached, the process advances to step S166. Otherwise, the process is terminated.
(S166) The device determines whether the Reset Type field is set to "automatic." If so, the process skips to step S171. If not (i.e., the reset type is "manual"), the process advances to step S167.
(S167) The device displays a data entry screen for user authentication.
(S168) The device waits for the user to enter the requested authentication data.
(S169) The device determines whether the entered data agrees with the authentication data that is previously recorded. If they match with each other, the process advances to step S171. Otherwise, the process branches to step S170.
(S170) The device sends an error message to indicate that the device cannot reset itself.
(S171) The device resets all the total amount fields in the Payment Criteria Management section to zeros, except for those in the Time Management subsection. It further resets the current usage count to zero.
(S172) Based on the reset interval parameter, the device calculates the date and time of the next reset operation. The calculated date and time is saved into the Next Scheduled Reset field.
In this way, the electronic wallet device is initialized when it is enabled for the first time in a day, so that relevant data fields in the Payment Criteria Management section will be cleared.

The above electronic wallet system provides various advantages as will be described below.

The first advantage is that the proposed device can quickly process the payment of small amounts of money, which is frequently encountered in our daily activity. More specifically, the owner sets up his/her electronic wallet device for specific intended payment purposes (e.g., bus fare, train fare, vending machine expenses, payphone charges). When transferring monetary data for a payment, the electronic wallet device automatically interacts with the payee monetary data management unit to identify what kind of payment is intended. The system quickly executes the payment, skipping user authentication if the payment purpose that is suggested by the payee monetary data management unit is among those registered in the electronic wallet device. The proposed system may not help avoid fraudulent use by an unauthorized person as long as that usage is within the pre-programmed scope of the electronic wallet device. However, the expected loss of money would be minimal since a certain limit can be set to the electronic wallet device for each individual payment purpose or for the total amount of payments.

The second advantage is that the proposed electronic wallet system can quickly process payments for particular purposes or to particular payees, without performing user authentication. Consumers tend to make payments for some regular expenses, such as laundry charges, newspaper subscription fees, telephone charges, water charges, and house rent. The proposed electronic wallet device is previously supplied with the information about those payees, including their names, addresses, phone numbers, and identification codes. When transferring monetary data for a payment, the electronic wallet device automatically interacts with the payee monetary data management unit to identify what kind of payment is intended and what establishment the payee is. If the payment purpose and payee's profile suggested by the payee monetary data management unit are in exact agreement with those registered in the electronic wallet device, then the system quickly executes the payment, skipping user authentication.

The third advantage is that the proposed system can manage the payment conditions on the basis of time slot data, so as to handle even such transactions whose payee profiles or payment purposes are not previously programmed in the electronic wallet device.

One type of time slot data is specified as an absolute time range. For example, a time slot may be defined as a fixed period from 9:00 to 17:00, meaning that the electronic wallet device can be used without user authentication during that period. The proposed system permits the user to transfer his/her monetary data without authentication if it is done within the specified time period.

Another type of time slot data is specified as a time range relative to the opening time. For example, a time slot may be defined as a period of five hours after the electronic wallet device is opened. Suppose that the electronic wallet device is opened at 10:00. In this case, the device can be used without user authentication during the period from 10:00 to 15:00. As such, the proposed system is designed to process payment transactions without authentication for a certain period after opening the device. The proposed system may not help avoid fraudulent use by an unauthorized person as long as that it is used during the pre-programmed time slot. However, by setting previously an appropriate parameter to limit the maximum amount of payment, the owner can minimize the expected loss of money. In addition, the proposed system will require user authentication once the programmed time slot expires, prohibiting further use of the electronic wallet device In the same day. Although the fraudulent user may then attempt to spend the remaining monetary data the next day, he/she will never be able to do it since the system requests him/her to show his/her authenticity this time.

The fourth advantage is that the proposed system can manage the payment conditions on the basis of maximum usage count (e.g., ten times) when making such payments for which no specific criteria about payees and payment purposes are defined. At the first payment transaction, the electronic wallet system does require the user to pass a user authentication process. Then it allows quick access to the monetary data, without repeating user authentication for any types of payments as long as they are within the limitation of maximum usage count that is previously defined in the electronic wallet device. Although the system may not help avoid fraudulent use by an unauthorized person until the usage count exceeds the limit, the owner can minimize the expected loss of money by setting an appropriate parameter to limit the maximum amount of payment. Once the maximum usage count is reached, the system will force the user to authenticate himself/herself at the first payment transaction on the next day. Therefore, the fraudulent user can no longer spend the remaining monetary data.

The fifth advantage is that the proposed system helps the user to give an appropriate tip to those who provide various services. Conventionally, people often leave a tip in cash, or make it include in the billed amount, even when they have an electronic wallet device to pay for the services including foods and beverages that they enjoyed. In the former case, it is therefore necessary for those people to always have some cash with them, aside from their electronic wallet devices. In the latter case, on the other hand, it is not always possible for the customers to pass their gratuity to an intended person. Such tips are usually pooled and redistributed to a plurality of servers, which tends to reduce the incentive for better services. The proposed system solves this problem by automatically calculating the tip (a gift for a service done) from the official cost of foods and beverages being billed, according to tipping parameters stored in the electronic wallet device, and then creating a separate piece of monetary data containing the date of payment and payment ID (including table number, server's identification number, etc). When processing the collected tips at a later time, the payment ID is used to identify who should receive each particular tip. The tips can therefore be distributed in a reasonable fashion, thus promoting improved services.

The processing steps explained in the above embodiment are implemented as a monetary data transfer program which is stored in a memory or any other storage facilities in an electronic wallet device. The electronic wallet device employs a processor device to execute this monetary data transfer program, so that various functions described in the above embodiment will be realized by the processor. The monetary data transfer program may be stored in some portable storage media, such floppy disks, for circulation purposes.

As described above, according to the present invention, the electronic wallet system determines whether to execute a user authentication process, based on predefined payment criteria. When some particular conditions are satisfied, it executes a payment without performing user authentication. This feature enables quick transaction processing while minimizing the risk of fraudulent use by an unauthorized person.

In addition, according to the present invention, the electronic wallet device determines whether to execute a user authentication process, based on predefined payment condition criteria. When some particular conditions are satisfied, it executes a payment without performing user authentication. This feature enables quick transaction processing while minimizing the risk of fraudulent use by an unauthorized person.

Furthermore, the present invention provides a computer-readable medium which stores a monetary data transfer program. This program causes a computer to determine whether to execute a user authentication process, based on predefined payment condition criteria. When some particular conditions are satisfied, the computer executes the payment without performing user authentication. With this feature of the program, the computer permits the user to transfer monetary data easily while minimizing the risk of fraudulent use by an unauthorized person.

## Claims

1. An electronic wallet system which electronically transfers money from a payer to a payee, comprising:
payer monetary data management means for storing and managing payer's monetary data;
payee monetary data management means for storing and managing payee's monetary data;
verification policy determination means, responsive to a money payment command, for determining whether to execute a user authentication process, based on predefined payment condition criteria;
user authentication means for verifying whether a person who is attempting to transfer the payer's monetary data is an authorized owner of the payer's monetary data to be transferred, when said verification policy determination means has determined that the user authentication process is required; and
money payment means for transferring the payer's monetary data representing the amount of money that is specified in the money payment command, from said payer monetary data management means to said payee monetary data management means, when said verification policy determination means has determined that no user authentication process is required, or when said user authentication means has successfully verified the authenticity of the user.

2. The electronic wallet system according to claim 1, wherein:
said verification policy determination means considers a predefined maximum allowable amount as part of the predefined payment condition criteria; and
if the amount of money that is specified in the money payment command is within the predefined maximum allowable amount, said verification policy determination means determines that no user authentication process is required.

3. The electronic wallet system according to claim 1, wherein:
said verification policy determination means considers a predefined time slot as part of the predefined payment condition criteria; and
if the money payment command is issued within the predefined time slot, said verification policy determination means determines that no user authentication process is required.

4. The electronic wallet system according to claim 1, further comprising counting means for providing a usage count by counting the number of payment transactions performed, wherein:
said verification policy determination means considers a predefined maximum allowable usage count as part of the predefined payment condition criteria; and
if the current value of the usage count is not greater than the predefined maximum allowable usage count, said verification policy determination means determines that no user authentication process is required.

5. The electronic wallet system according to claim 4, wherein said counting means resets the usage count to zero at regular intervals.

6. The electronic wallet system according to claim 1, wherein:
said verification policy determination means considers predefined payee profile data as part of the predefined payment condition criteria; and
if the money payment command is intended for a payee described in the predefined payee profile data, said verification policy determination means determines that no user authentication process is required.

7. The electronic wallet system according to claim 1, wherein:
said verification policy determination means considers predefined payment purpose data as part of the predefined payment condition criteria; and
if the money payment command is intended for a payment purpose that is described in the predefined payment purpose data, said verification policy determination means determines that no user authentication process is required.

8. The electronic wallet system according to claim 1, further comprising total amount calculation means for calculating a total amount of money that has been transferred, wherein:
said verification policy determination means considers a predefined maximum allowable total amount as part of the predefined payment condition criteria; and
if the sum of the amount of money specified in the money payment command and the total amount of the transferred money is not greater than the predefined maximum allowable total amount, said verification policy determination means determines that no user authentication process is required.

9. The electronic wallet system according to claim 8, wherein said total amount calculation means resets the total amount to zero at regular intervals.

10. The electronic wallet system according to claim 1, wherein said verification policy determination means has a criterion about a tip which is to be paid in connection with an official cost being billed, besides having the predefined payment condition criteria.

11. The electronic wallet system according to claim 1, further comprising tip calculation means for calculating a tip amount according to the amount of money being billed, when payment of a tip is required.

12. The electronic wallet system according to claim 1, further comprising payment condition updating means for updating the payment condition criteria which are previously defined in said verification policy determination means.

13. An electronic wallet device which electronically transfers money from a payer to a payee, comprising:
payer monetary data management means for storing and managing payer's monetary data;
verification policy determination means, responsive to a money payment command, for determining whether to execute a user authentication process, based on predefined payment condition criteria;
user authentication means for verifying whether a person who is attempting to transfer the payer's monetary data is an authorized owner of the payer's monetary data to be transferred, when said verification policy determination means has determined that the user authentication process is required; and
money payment means for transferring the payer's monetary data representing the amount of money that is specified in the money payment command, from said payer monetary data management means to a location specified in the money payment command, when said verification policy determination means has determined that no user authentication process is required, or when said user authentication means has successfully verified the authenticity of the user.

14. The electronic wallet device according to claim 13, wherein:
said verification policy determination means considers a predefined maximum allowable amount as part of the predefined payment condition criteria; and
if the amount of money that is specified in the money payment command is within the predefined maximum allowable amount, said verification policy determination means determines that no user authentication process is required.

15. The electronic wallet device according to claim 13, wherein:
said verification policy determination means considers a predefined time slot as part of the predefined payment condition criteria; and
if the money payment command is issued within the predefined time slot, said verification policy determination means determines that no user authentication process is required.

16. The electronic wallet device according to claim 13, further comprising counting means for providing a usage count by counting the number of payment transactions performed, wherein:
said verification policy determination means considers a predefined maximum allowable usage count as part of the predefined payment condition criteria; and
if the current value of the usage count is not greater than the predefined maximum allowable usage count, said verification policy determination means determines that no user authentication process is required.

17. The electronic wallet device according to claim 16, wherein said counting means resets the usage count to zero at regular intervals.

18. The electronic wallet device according to claim 13, wherein:
said verification policy determination means considers predefined payee profile data as part of the predefined payment condition criteria; and
if the money payment command is intended for a payee described in the predefined payee profile data, said verification policy determination means determines that no user authentication process is required.

19. The electronic wallet device according to claim 13, wherein:
said verification policy determination means considers predefined payment purpose data as part of the predefined payment condition criteria; and
if the money payment command is intended for a payment purpose that is described in the predefined payment purpose data, said verification policy determination means determines that no user authentication process is required.

20. The electronic wallet device according to claim 13, further comprising total amount calculation means for calculating a total amount of money that has been transferred, wherein:
said verification policy determination means considers a predefined maximum allowable total amount as part of the predefined payment condition criteria; and
if the sum of the amount of money specified in the money payment command and the total amount of the transferred money is not greater than the predefined maximum allowable total amount, said verification policy determination means determines that no user authentication process is required.

21. The electronic wallet device according to claim 20, wherein said total amount calculation means resets the total amount to zero at regular intervals.

22. The electronic wallet device according to claim 13, wherein said verification policy determination means has a criterion about a tip which is to be paid in connection with an official cost being billed, besides having the predefined payment condition criteria.

23. The electronic wallet device according to claim 13, further comprising tip calculation means for calculating a tip amount according to the amount of money being billed, when payment of a tip is required.

24. The electronic wallet device according to claim 13, further comprising payment condition updating means for updating the payment condition criteria which are previously defined in said verification policy determination means.

25. A computer-readable medium storing a monetary data transfer program which transfers money from a payer to a payee, the program being designed to run on a computer in order to cause the computer to function as:
payer monetary data management means for storing and managing monetary data;
verification policy determination means, responsive to a money payment command, for determining whether to execute a user authentication process, based on predefined payment condition criteria;
user authentication means for verifying whether a person who is attempting to transfer the payer's monetary data is an authorized owner of the payer's monetary data to be transferred, when said verification policy determination means has determined that the user authentication process is required; and
money payment means for transferring the monetary data representing the amount of money that is specified in the money payment command, when said verification policy determination means has determined that no user authentication process is required, or when said user authentication means has successfully verified the authenticity of the user.

26. The computer-readable medium according to claim 25, wherein:
said verification policy determination means considers a predefined maximum allowable amount as part of the predefined payment condition criteria; and
if the amount of money that is specified in the money payment command is within the predefined maximum allowable amount, said verification policy determination means determines that no user authentication process is required.

27. The computer-readable medium according to claim 25, wherein:
said verification policy determination means considers a predefined time slot as part of the predefined payment condition criteria; and
if the money payment command is issued within the predefined time slot, said verification policy determination means determines that no user authentication process is required.

28. The computer-readable medium according to claim 25, wherein:
the program further causes the computer to function as counting means for providing a usage count by counting the number of payment transactions performed;
said verification policy determination means considers a predefined maximum allowable usage count as part of the predefined payment condition criteria; and
if the current value of the usage count is not greater than the predefined maximum allowable usage count, said verification policy determination means determines that no user authentication process is required.

29. The computer-readable medium according to claim 28, wherein said counting means resets the usage count to zero at regular intervals.

30. The computer-readable medium according to claim 25, wherein:
said verification policy determination means considers predefined payee profile data as part of the predefined payment condition criteria; and
if the money payment command is intended for a payee described in the predefined payee profile data, said verification policy determination means determines that no user authentication process is required.

31. The computer-readable medium according to claim 25, wherein:
said verification policy determination means considers predefined payment purpose data as part of the predefined payment condition criteria; and
if the money payment command is intended for a payment purpose that is described in the predefined payment purpose data, said verification policy determination means determines that no user authentication process is required.

32. The computer-readable medium according to claim 25, wherein:
the program further causes the computer to function as total amount calculation means for calculating a total amount of money that has been transferred;
said verification policy determination means considers a predefined maximum allowable total amount as part of the predefined payment condition criteria; and
if the sum of the amount of money specified in the money payment command and the total amount of the transferred money is not greater than the predefined maximum allowable total amount, said verification policy determination means determines that no user authentication process is required.

33. The computer-readable medium according to claim 32, wherein said total amount calculation means resets the total amount to zero at regular intervals.

34. The computer-readable medium according to claim 25, wherein said verification policy determination means has a criterion about a tip which is to be paid in connection with an official cost being billed, besides having the predefined payment condition criteria.

35. The computer-readable medium according to claim 25, the program further causing the computer to function as tip calculation means for calculating a tip amount according to the amount of money being billed, when payment of a tip is required.

36. The computer-readable medium according to claim 25, the program further causing the computer to function as payment condition updating means for updating the payment condition criteria which are previously defined in said verification policy determination means.
